(19) Europäisches Patentamt
European Patent Office
Office européen des brevets

(11) Veröffentlichungsnummer: **0 322 725 A1**

(12) **EUROPÄISCHE PATENTANMELDUNG**

(21) Anmeldenummer: **88121353.2**

(51) Int. Cl.[4]: **C08G 73/12 , C08F 222/40**

(22) Anmeldetag: **21.12.88**

(30) Priorität: **29.12.87 DE 3744389**

(43) Veröffentlichungstag der Anmeldung: **05.07.89 Patentblatt 89/27**

(84) Benannte Vertragsstaaten: **CH DE ES FR GB IT LI NL**

(71) Anmelder: **BASF Aktiengesellschaft**
**Carl-Bosch-Strasse 38**
**D-6700 Ludwigshafen(DE)**

(72) Erfinder: **Eisenbarth, Philipp, Dr.**
**Gutleutstrasse 12**
**D-6702 Bad Duerkheim(DE)**
Erfinder: **Dittrich, Uwe, Dr.**
**Pfalzgrafenstrasse 21**
**D-6700 Ludwigshafen(DE)**

(54) **Bismaleinimid-Harze.**

(57) Die Erfindung betrifft Bismaleinimidharze, die als Bismaleinimid ein solches der Formel enthalten:

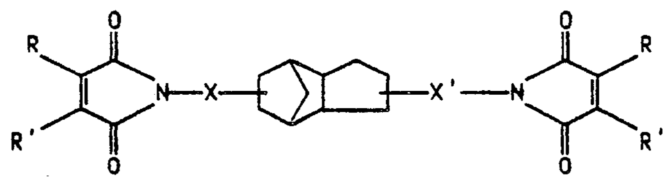

wobei X $-CH_2-$, $-C_6H_4-CO_2-CH_2-$ oder $-C_6H_4-CO-NH-CH_2-$,
X′ entsprechend $-CH_2-$, $-CH_2-O_2C-C_6H_4-$ oder $-CH_2-NH-CO-C_6H_4-$ bedeutet, und die Reste R und R′ Wasserstoff, Methyl oder Phenyl sein können.

EP 0 322 725 A1

## Bismaleinimid-Harze

Die Erfindung betrifft hitzehärtbare Formmassen auf Basis von Bismaleinimidharzen.

Aromatische Bismaleinimidmonomere, die zur Herstellung von Bismaleinimidharzen, z.B. nach DE-A 1 770 867, DE-A 2 459 925 oder US-A 4 100 140 Verwendung finden, sind relativ kurzkettige, ein oder zwei Phenylenringe enthaltende Verbindungen, beispielsweise 4,4'-Bismaleinimidodiphenylmethan, 4,4'-Bismaleinimidodiphenylether oder 2,4-Bismaleinimidotoluol. Die daraus herstellbaren Werkstoffe besitzen zwar eine sehr gute Hitzebeständigkeit, sind jedoch infolge der hohen Vernetzungsdichte spröde und absorbieren relativ viel Feuchtigkeit, was sich negativ auf ihr mechanisches Verhalten unter feuchtheißen Bedingungen auswirkt. Infolge der hohen Schmelzpunkte, der geringeren Löslichkeit in niedrig siedenden Lösungsmitteln und der Neigung zu Rekristallisationserscheinungen ist die Verarbeitbarkeit der oben genannten Bismaleinimide zu Halbzeugen bzw. Prepregs für Verbundwerkstoffe relativ schwierig.

Ein Weg, die Verarbeitbarkeit und Löslichkeit zu verbessern, besteht z.B. darin, aliphatische Bismaleinimide, gegebenenfalls in Kombination mit aromatischen Derivaten, z.B. 1,6-Bismaleinimidohexan oder N-Allylmaleinimid, einzusetzen, was jedoch die thermische Stabilität des Polymeren stark herabsetzt.

Der Erfindung lag daher die Aufgabe zugrunde, Bismaleinimidharze bereitzustellen, welche die genannten Nachteile nicht besitzen.

Diese Aufgabe wird gelöst durch die erfindungsgemäßen Harze, die als Bismaleinimidkomponente A ein Bismaleinimid der Formel I enthalten:

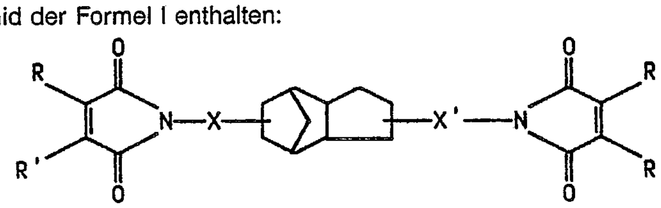 I

wobei die Reste R und R' = H, Methyl oder Phenyl bedeuten,
X kann sein $-CH_2-$, $-C_6H_4-CO_2-CH_2-$ oder $C_6H_4-CO-NH-CH_2-$,
X' entsprechend $-CH_2-$, $-CH_2-O_2C-C_6H_4-$ oder $-CH_2-NH-CO-C_6H_4-$.

Bismaleinimide der Formel I stellen Isomerengemische dar und sind nach bekannten Verfahren, z.B. nach DE-B 20 40 094 oder DE 29 13 300 durch Umsetzung eines Diamins der Formel II mit 2 Äquivalenten Maleinsäureanhydrid und anschließender Dehydratisierung herstellbar.

In dem Diamin der Formel

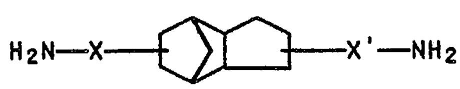 II

haben die Symbole X und X' die gleiche Bedeutung wie in Formel I.

Für X und X' = $CH_2$ stellt das Diamin II eine bekannte Verbindung dar (TCD-Diamin der Fa. Hoechst). Zur Herstellung von Diaminen mit X = $-C_6H_4-CO_2-CH_2-$ oder $-C_6H_4-CO-NH-CH_2-$ wird das genannte TCD-Diamin oder der analoge Dialkohol z.B. mit Aminobenzoesäureestern unter Alkoholabspaltung kondensiert. Bevorzugt ist ein Bismaleinimid mit X = X' = $CH_2$.

Die erfindungsgemäßen Bismaleinimidharze werden erhalten durch Umsetzung eines Bismaleinimids A der Formel I allein oder in Kombination mit weiteren Bismaleinimiden, z.B. 4,4'-Bismaleinimidodiphenylmethan, 2,4-Bismaleinimidotoluol, 1,6-Bismaleinimido-2,2,4-trimethylhexan mit einem Comonomeren B. Geeignete Comonomere B sind Polyamine, Polyphenole, Alkenylphenole oder -phenolether, Aminophenole, Vinyl- und Allylverbindungen. Als Comonomeren geeignete Polyamine sind z.B. aus DE-A 1 770 867 bekannt; bevorzugt sind 4,4'-Diaminodiphenylmethan, 4,4'-Diaminodiphenylsulfon und 3,3'-Diaminodiphenylsulfon. Unter den verwendbaren Polyphenolen sind Bisphenol A, Bisphenol F oder Novolake zu nennen; weitere sind in DE-A 2 459 925 aufgeführt. Geeignete Alkenylphenole oder -phenolether werden in DE-A 2 627 045 beschrieben, bevorzugt ist o,o-Diallylbisphenol A. Ebenfalls geeignet sind oligomere allyl- oder propenylterminierte Sulfone. Einsetzbare Aminophenole sind z.B. m- oder p-Aminophenol. Unter Vinyl- und Allylverbindungen sind beispielhaft zu nennen: Styrol, Divinylbenzol, Diallylphthalat, Acrylate, Diallylbenzol, Triallylisocyanurat, Triallylcyanurat oder Vinylpyrrolidon. Ihr Anteil beträgt 5 bis 100 Gew.%, bezogen auf A.

Bei einer bevorzugten Ausführungsform enthalten die erfindungsgemäßen Harze als Comonomer ein

Diamin der Formel II, das dieselbe Struktureinheit wie die Bismaleinimide der Formel I besitzt. Ihr Zusatz verstärkt die bereits durch die Verwendung der Bisimide I erreichten Eigenschaftsverbesserungen. Ihr Anteil beträgt 5 bis 100, vorzugsweise 20 bis 80 Gew.%, bezogen auf A. Bevorzugt ist ein Diamin der Formel II mit $X = X' = CH_2$.

Je nach beabsichtigtem Verwendungszweck kann es vorteilhaft sein, den erfindungsgemäßen Harzen weitere Komponenten beizufügen. In Frage kommen beispielsweise übliche Epoxidharze oder Cyanatharze, bevorzugt in Mengen von 5 bis 40 Gew.%, bezogen auf A.

Weitere Zusätze sind Katalysatoren oder auch Inhibitoren. Geeignete Katalysatoren sind tertiäre Amine, Imidazole, organische Säuren, tertiäre Phosphine oder Peroxide. Als Inhibitoren sind Hydrochinon, Benzochinon oder Phenothiazin zu nennen. Die Menge an eingesetzten Initiatoren bzw. Inhibitoren soll etwa zwischen 0,01 - 1,5 Gew.%, bezogen auf A, liegen.

Die erfindungsgemäßen Harze können darüberhinaus die in der Technologie der härtbaren Kunststoffe üblichen Zusatzstoffe enthalten, wie Füllstoffe, Weichmacher, Pigmente, Farbstoffe, Formtrennmittel, flammhemmende Stoffe. Als Füllstoffe können auch Glas-, und Kohlenstoffasern, Graphitpulver, Glimmer, Quarzpulver, Koalin oder Metallpulver bis zu einem Anteil von 80 Gew.%, bezogen auf A + B, verwendet werden.

Neben relativ guter Löslichkeit, auch in niedrig siedenden Lösungsmitteln, besitzen die erfindungsgemäßen Harze deutlich niedrigere Erweichungspunkte und Viskositäten als Harze auf Basis der üblicherweise eingesetzten aromatischen Bismaleinimide, wie z.B. 4,4′-Bismaleinimidodiphenylmethan. Insbesondere wird dadurch eine wesentlich verbesserte Verarbeitbarkeit, z.B. bei der Schmelztränkung von Verstärkungsfasern erreicht, denn diese kann bei niedrigeren Temperaturen durchgeführt werden. Auch wird die von vielen Halbzeugverarbeitern im Flugzeugbau gewünschte Klebrigkeit (tack) von Prepregs positiv beeinflußt. Es zeigte sich ferner, daß die erfindungsgemäßen Harze eine erheblich geringere Rekristallisationsneigung besitzen. Überraschend liegt die Hitzebeständigkeit der erfindungsgemäßen Harze trotz der aliphatischen Grundstruktur nur wenig unterhalb der von aromatischen Bismaleinimiden, jedoch erheblich über dem Niveau der üblichen aliphatischen Imide.

Die erfindungsgemäßen Harze sind als Imprägnier-, Gieß- und Laminierharze als Formmassen (gefüllt oder ungefüllt) oder als Klebstoffe einsetzbar.

Dienen sie zur Herstellung von Hochleistungsverbundwerkstoffen, so kann die Tränkung von Glas-, Kohlenstoff- oder Aramidfasern unter Bildung von unidirektionalen Prepregs, Gewebeprepregs oder Rovings entweder aus der Schmelze bei 50 - 150 °C oder aus Lösung erfolgen. Geeignete Lösungsmittel sind halogenierte Kohlenwasserstoffe, wie z.B. Dichlormethan, Ketone wie z.B. Aceton oder Methylethylketon, ferner Glykolester, Toluol, Dimethylformamid, N-Methylpyrrolidon sowie Gemische aus mehreren Lösungsmitteln.

Zur Herstellung der erfindungsgemäßen Bismaleinimidharze werden die Ausgangsmaterialien unter Anwendung der üblichen Techniken vermischt und auf Temperaturen zwischen 70 - 190 °C erhitzt, wobei die Bildung eines Präpolymeren erfolgt. Je nach Fortschritt der Vorpolymerisation erhält man eine hochviskose Schmelze oder einen glasartig erstarrten Feststoff, der je nach Verwendungszweck gemahlen oder in einem Lösungsmittel gelöst wird. Die Herstellung der Harze kann auch in einem der oben genannten Lösungsmittel erfolgen.

Die Härtung der erfindungsgemäßen Harze erfolgt bei Temperaturen von ca. 100 - 300 °C, gegebenenfalls unter Druck, vorzugsweise zwischen 160 - 260 °C. Die gewählte Härtungstemperatur hängt entscheidend von der Länge der Härtungszeit ab. Vielfach ist eine stufenweise Härtung vorteilhaft, wobei bei einer niedrigeren Temperatur zunächst unter Formgebung eine Vernetzung der Polymeren herbeigeführt wird. Nach Entformen kann sich dann zur vollständigen Aushärtung eine unter Umständen mehrstündige Nachhärtung oberhalb 200 °C anschließen.

Aus den erfindungsgemäßen Harzen können Hochleistungswerkstoffe, z.B. Isoliermaterialien, Strukturbauteile, Apparategehäuse und elektrische Bauteile hergestellt werden, die hohen Temperaturen ausgesetzt sind.

## Beispiele

### Herstellung der erfindungsgemäßen Bismaleinimide

Bismaleinimid A ($X = CH_2$)

Zu einer Lösung von 588 g Maleinsäureanhydrid in 900 ml Dimethylformamid werden bei 10 °C 582 g TCD-Diamin (Handelsprodukt von Fa. Hoechst; 3(4), 8(9)-Bis-(aminomethyl)-tricyclo[5.2.1.$0^{2,6}$]-decan) in 900 ml Dimethylformamid innerhalb 1 Stunde zugetropft. Man rührt noch 2 Stunden bei Raumtemperatur nach und gibt dann 59,4 g Tetraisopropoxytitan hinzu. Nach Aufheizen auf 70 °C werden 1212 g Acetanhydrid zugegeben und die Mischung weitere 2 Stunden auf 70 °C erhitzt. Anschließend läßt man auf Raumtemperatur abkühlen und gießt die Mischung in 10 l Wasser. Man extrahiert mit 2 l Dichlormethan, wobei sich während der Extraktion ein farbloser, in Wasser und Dichlormethan schwerlöslicher Niederschlag bildet, der abfiltriert wird. Man erhält 71,2 g (6,7 %) Bismaleinimid A (Isomer I) mit Schmelzpunkt 172-175 °C; sein IR- sowie $^1$H-NMR-Spektrum ist identisch mit dem des Hauptproduktes. Zur Isolierung des Hauptproduktes wird die Mutterlauge mit 10 l Wasser gewaschen, über Magnesiumsulfat getrocknet und im Vakuum eingedampft. Der verbleibende halbfeste Rückstand wird in wenig kaltem Ethanol aufgenommen, abfiltriert und bei 70 °C getrocknet. Man erhält 421 g (40 %) Bismaleinimid A mit Schmelzpunkt 140-149 °C (Isomerengemisch II); IR (KBr): 3100 (CH), 1770, 1710 $cm^{-1}$ (CO); $^1$H-NMR ($D_6$-DMSO, 270 MHz): 0,8-2,45 (m), 3,10-3,30 (m, $CH_2$-Imid), 7,03 (s, 4H, olef.).

Herstellung von Bismaleinimidharzen

Beispiel 1

In einem Reaktionsgefäß werden unter Rühren bei einer Badtemperatur von 170 °C 275,2 g 4,4′-Bismaleinimidodiphenylmethan, 68,8 g Bismaleinimid A und 1,2 g Dimethylhydrochinon aufgeschmolzen. Man gibt anschließend 56 g 3-Aminophenol und 2 g N,N-Dimethylanilin hinzu und verarbeitet die flüssige Harzmasse nach 5 Minuten wie folgt weiter:

a) Ein Teil des Harzes wird zwecks schnelleren Abkühlens auf eine Metallfolie ausgegossen. Das erhaltene rotbraune Harz besitzt einen Erweichungspunkt von ca. 30 °C (Kofferbank).

b) Der restliche Teil der Harzmasse wird in zwei 30 x 30 x 0,1 bzw. 0,4 cm große Metallformen gegossen und 2 Stunden bei 160 °C, 2 Stunden bei 190 °C und 10 Stunden bei 240 °C gehärtet. Das Polymer besitzt bei 300 °C noch einen Schubmodul von 900 $N/mm^2$ (DIN 53 455); E-Modul: 4130 $N/mm^2$ (DIN 53 457).

Beispiel 2

Analog Beispiel 1 wird aus 35 g Bismaleinimid A, 15 g o,o-Diallylbisphenol A und 0,01 g Triphenylphosphin ein Bismaleinimidharz hergestellt und gehärtet. Harzerweichungspunkt: < 20 °C; Viskosität bei 100 °C: 420 mPas; Glasübergangstemperatur des Polymeren: 284 °C (per DMA); Wasserabsorption (24 h in kochendem Wasser): 3,58 %.

Beispiel 3

Analog Beispiel 1 wird aus 41 g Bismaleinimid A, 9 g 4,4′-Diaminodiphenylmethan und 0,01 g Triphenylphosphin ein Bismaleinimidharz hergestellt und gehärtet. Harzerweichungspunkt: 42 °C; Viskosität bei 100 °C: 110 mPas; Glasübergangstemperatur des Polymeren: 285 °C; Wasserabsorption: 3,61 %.

**Ansprüche**

1. Hitzehärtbare Bismaleinimidharze, enthaltend
   A)ein Bismaleinimid und
   B)5 - 100 Gew.%, bezogen auf A, eines Comonomeren,

dadurch gekennzeichnet, daß die Komponente A mindestens 1 Gew.% des Bismaleinimids der Formel I enthält:

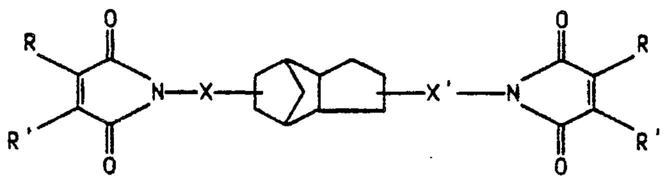

I

wobei X $-CH_2-$, $-C_6H_4-CO_2-CH_2-$ oder $C_6H_4-CO-NH-CH_2-$, X' entsprechend $-CH_2-$, $-CH_2-O_2C-C_6H_4-$ oder $-CH_2-NH-CO-C_6H_4-$ bedeutet, und die Reste R und R' Wasserstoff, Methyl oder Phenyl sein können.

2. Hitzehärtbare Harze nach Anspruch 1, dadurch gekennzeichnet, daß die Comonomeren B Polyamine, Polyphenole, Alkenylphenole, Alkenylphenolether, Aminophenole, Vinyl-, Propenyl- oder Allylverbindungen sind.

3. Hitzehärtbare Harze nach Anspruch 1, dadurch gekennzeichnet, daß das Comonomere B ein Diamin der Formel II darstellt,

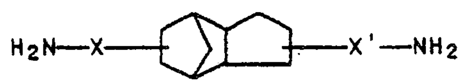

II

wobei die Symbole X und X' die gleiche Bedeutung wie unter 1. haben.

Europäisches Patentamt

# EUROPÄISCHER RECHERCHENBERICHT

Nummer der Anmeldung

EP 88 12 1353

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| | Keine Entgegenhaltungen.<br>----- | | C 08 G 73/12<br>C 08 F 222/40 |
| | | | **RECHERCHIERTE SACHGEBIETE (Int. Cl.4)** |
| | | | C 08 G<br>C 08 F |

Der vorliegende Recherchenbericht wurde für alle Patentansprüche erstellt

| Recherchenort | Abschlußdatum der Recherche | Prüfer |
|---|---|---|
| DEN HAAG | 03-04-1989 | LEROY ALAIN |

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)